# EUROPEAN PATENT APPLICATION

(11) **EP 4 485 016 A1**
(43) Date of publication of application: **01.01.2025**
(21) Application number: 23182353.5
(22) Date of filing: 29.06.2023
(51) Int. Cl.: G02B 3/14, G02B 27/01

(54) **A LENS STACK FOR CREATING TUNABLE ASTIGMATISM**

(71) Applicant: poLight ASA, 3185 Skoppum (NO)
(72) Inventor: Tallaron, Nicolas, 69250 Neuville sur Saône (FR); Kilpinen, Janne Tapani, 37800 Akaa (FI); Gillet, Alain, 65330 Galan (FR); Craen, Pierre, 4053 Embourg (BE)
(74) Representative: Plougmann Vingtoft a/s

(57) **Abstract**

A lens stack for creating tunable astigmatism comprising one or more cylindrically tunable lenses.

## Description

### FIELD OF THE INVENTION

The present invention relates to a lens stack for creating tunable astigmatism and to an electronic device comprising a lens stack for creating tunable astigmatism.

### BACKGROUND OF THE INVENTION

Consumer, medical, ophthalmic, and industrial applications are markets that require more and more tunable optic capabilities. Tunable focus lens has been developed through various technologies during the last few decades to comply with the requirements of the diverse applications.

Ophthalmic and human vision correction have for many decades generated ideas and solutions to correct and compensate astigmatism.

Recent developments in AR-VR (augmented reality and virtual reality application) glass, display have revived the interest in tunable astigmatism solutions since AR-VR devices are interacting with human vision require solutions that are compact, small, fast, and have low power consumption.

Corrections of astigmatic aberrations through the use of lens stack may be complex and inaccurate and generally not implementable in mass production conditions.

More importantly, current solutions to create tunable astigmatism may not be suitable for future applications generated by the AR-VR Glass/display trend.

Hence, there is a need for low-cost and mass producible, compact, accurate and low power consumption solutions having effective means for correction of astigmatism.

### OBJECT OF THE INVENTION

An object of the present invention is to provide a lens stack for creating tunable astigmatism.

Another object of the invention may be seen as the provision of a lens stack for creating tunable astigmatism creating tunable astigmatism of amplitude that is in a range of +/- 3 diopter in any orientation.

An even further object of the invention may also be seen as to provide an alternative to current lens stack solutions.

In particular, it may be seen as an object of the present invention to provide an accurate and dynamic lens stack for creating tunable astigmatism by combining at least two cylindrically tunable lens.

### SUMMARY OF THE INVENTION

The above described object and several other objects are intended to be obtained in a first aspect of the invention by a lens stack for creating tunable astigmatism.

The lens stack for creating tunable astigmatism comprises a first cylindrically tunable lens comprising a lens body sandwiched between a first and a second transparent membrane and one or more actuators located onto the first transparent membrane or onto the second transparent membrane.

The first cylindrically tunable lens has a first longitudinal axis, meaning that, when in operation, the one or more actuators, located onto the first transparent membrane or onto the second transparent membrane will define a cylindrical lens having a first longitudinal axis.

The lens stack for creating tunable astigmatism may further comprises a second lens comprising a lens body sandwiched between a first and a second transparent membrane and one or more actuators located onto the first transparent membrane or onto the second transparent membrane.

The second lens may be a second cylindrically tunable lens comprising a lens body sandwiched between a first and a second transparent membrane and one or more actuators located onto the first transparent membrane or onto the second transparent membrane.

The second cylindrically tunable lens has a second longitudinal axis, meaning that, when in operation, the one or more actuators, located onto the first transparent membrane or onto the second transparent membrane will define a cylindrical lens having a second longitudinal axis.

Cylindrically tunable is referred herein to a lens that can be tuned into a cylindrical lens by actuation though one or more actuators.

The lens stack is characterized by having the first cylindrically tunable lens positioned onto the second cylindrically tunable lens at an angle, such as pre-determined or pre-defined angle.

The angle of location or position may be between 0° and 90°, such as between 30° and 60°, for example at 35°, 40°, 45°, 50° or 55°.

The pre-determined or pre-defined angle, defined by the position of the first cylindrically tunable lens and the second cylindrically tunable lens, is the angle between the second longitudinal axis of the second cylindrically tunable lens and the first longitudinal axis of the first cylindrically tunable lens.

The positioning of the first and second lens allows for the creation of tunable astigmatism, such as correction of astigmatic aberrations.

In some embodiments, the first or the second membrane of the first cylindrically tunable lens or of the second cylindrically tunable lens is a rigid structure, for example a rigid substrate, such as a back window.

The rigid substrate may have planar or curved surfaces.

In some further embodiments, the second cylindrically tunable lens is connected to the first cylindrically tunable lens via a rigid assembly.

A rigid assembly may be a metal, plastic or ceramic structure having no or a very low degree of flexibility, such as bendability, supporting a non flexible connection between the first and the second cylindrical tunable lens.

The rigid assembly may be also referred to as a structure having a high degree of stiffness through which the first and the second cylindrical tunable lens are connected.

High degree of stiffness is defined as having a Young's modulus between 1 GPa and 500 GPa.

The rigid assembly is attached to the first and second cylindrical tunable lens by fastening means, such as glue, or by joining means, such as by welding.

In some other embodiments, the second cylindrically tunable lens is abutted the first cylindrically tunable lens.

Abutted may be referred to as glued, or just in contact, i.e. having at least one external surface in contact, for example a surface along an edge of the tunable lens.

In some embodiments, the second transparent membrane of the first cylindrically tunable lens is the first membrane of the second cylindrically tunable lens.

First and second cylindrically tunable lens may be integrated in a single lens stack assembly in which one of the transparent membrane is shared between the two cylindrically tunable lenses. This embodiment has the advantage of allowing for a compact structure reducing the total thickness of the lens stack. This embodiment has also the advantage of reducing complexity of the lens stack by combining the function of a rigid substrate in a single membrane or substrate.

In some other embodiments of this configuration, the membrane separating the first cylindrically tunable lens from the second cylindrically tunable lens may be an open rigid structure, such as a ring structure, allowing at least partial contact between the lens body of the first cylindrically tunable lens and the one of the second cylindrically tunable lens.

Thus in some embodiments, the second transparent membrane of the first cylindrically tunable lens or the first membrane of the second cylindrically tunable lens is an open rigid substrate, such as a ring structure, i.e. a structure having a through-hole opening.

In these embodiments, the independent shaping of the two lens body, upon actuation onto the first membrane of the first cylindrically tunable lens and on the second membrane of the second cylindrically tunable lens, is achievable due to the presence of the open rigid structure acting as membrane between the two lens bodies.

In some further embodiments, the lens stack further comprises one or more further lens such as at least a third lens.

The third lens is a tunable lens comprising a transparent, deformable lens body sandwiched between a first and a second transparent membrane and one or more actuators located onto the first transparent membrane or onto the second transparent membrane of the third lens.

The third lens provides an advantageous focusing function to the lens stack thus improving performance of the lens stack.

The third lens may be connected to the second cylindrically tunable lens via a rigid assembly.

The rigid assembly connecting the third lens to the second cylindrically tunable lens may be a metal, plastic or ceramic structure having no or a very low degree of flexibility, such as bendability, supporting a non flexible connection between the first and the second cylindrical tunable lens.

The rigid assembly connecting the third lens to the second cylindrically tunable lens may be also referred to as a structure having a high degree of stiffness through which the third lens and the second cylindrical tunable lens are connected.

High degree of stiffness is defined as having a Young's modulus between 1 GPa and 500 GPa.

The rigid assembly is attached to the third lens and the second cylindrical tunable lens by fastening means, such as glue, or by joining means, such as by welding.

In some other embodiments, the first cylindrically tunable lens, the second cylindrically tunable and the third lens are stacked and kept in position through the use of adhesive means.

In some embodiments, the third lens is abutted the second cylindrically tunable lens, such as in contact with or resting against the second cylindrically tunable lens.

In some embodiments, the one or more actuators of the first cylindrically tunable lens are connected to the first or second transparent membrane of the first cylindrically tunable lens by adhesive means.

The one or more actuators of the first cylindrically tunable lens may also be connected to the first or second transparent membrane of the first cylindrically tunable lens by pressure means.

In some other embodiments, the one or more actuators of the second cylindrically tunable lens are connected to the first or second transparent membrane of the second cylindrically tunable lens by adhesive means.

The one or more actuators of the second cylindrically tunable lens may also be connected to the first or second transparent membrane of the second cylindrically tunable lens by pressure means.

In some further embodiments, the one or more actuators of the third lens are connected to the first or second transparent membrane of the third lens by adhesive means.

The one or more actuators of the third lens may also be connected to the first or second transparent membrane of the third lens by pressure means.

The connection between the one or more actuators and the correspondent first and second transparent membrane of the first cylindrically tunable, second cylindrically tunable and third lens may be achieved by at least partial adhesion between discontinuous areas of the membranes. For example, the one or more actuator may be deposited at least on two edges of the first or second membrane. The one or more actuator may also be deposited onto the membranes by vapor deposition, such as Chemical or Physical Vapor Deposition (CVD or PVD), or by other printing technique, such as screen printing.

The lens body may be a fluid, such as a lens body in a liquid state.

In some embodiments, the lens body of the first cylindrically tunable lens has a refractive index above 1.29, such as between 1.29 and 1.35, for example 1.33.

In some other embodiments, the lens body of the second cylindrically tunable lens has a refractive index above 1.29, such as between 1.29 to 1.35, for example 1.33.

In some further embodiments, the lens body of the third lens has a refractive index above 1.29, such as between 1.29 and 1.35, for example 1.33.

In some embodiments, advantageously, all lenses, i.e. the first cylindrically tunable lens, the second cylindrically tunable lens and the third lens may have a refractive index above 1.29, such as between 1.29 and 1.35, for example 1.33.

In some embodiments, the lens body of the first cylindrically tunable lens has an elastic modulus larger than 300 Pa.

In some other embodiments, the lens body of the second cylindrically tunable lens has an elastic modulus larger than 300 Pa.

In some embodiments, the lens body of the third lens has an elastic modulus larger than 300 Pa.

In some embodiments, advantageously, all lenses, i.e. the first cylindrically tunable lens, the second cylindrically tunable lens and the third lens may have an elastic modulus larger than 300 Pa.

In some embodiments, the lens body of the first cylindrically tunable lens is made from a polymer network of cross-linked or partly cross-linked polymers, and a miscible oil or combination of oils.

In some other embodiments, the lens body of the second cylindrically tunable lens is made from a polymer network of cross-linked or partly cross-linked polymers, and a miscible oil or combination of oils.

In some further embodiments, the lens body of the third lens is made from a polymer network of cross-linked or partly cross-linked polymers, and a miscible oil or combination of oils.

In some embodiments, advantageously, all lenses, i.e. the first cylindrically tunable lens, the second cylindrically tunable lens and the third lens are made from a polymer network of cross-linked or partly cross-linked polymers, and a miscible oil or combination of oils.

The lens stack of the invention may also comprise more than three lenses, i.e. providing improved functionality and performance by adding further lenses to the lens stack.

The lens stack of the invention may also comprise a driver configured to operate the lens of the stack through a FPCs (Flexible Printed Circuits) and PCBs (Printed Circuit Boards) so as to create tunable astigmatism.

In a second aspect the invention relates to an electronic device comprising the lens stack according to the first aspect, wherein the electronic device is anyone of: a display of a portable computer device such as a smartphone, a watch, a tablet, such as an iPad^{®}; a pair of spectacles; a pair of AR-VR glass/spectacles; a measurement device; an image projector arranged for creating an image by scanning light beams; a camera module, a collimated laser diode device or another electronic device.

The first, second and other aspects and embodiments of the present invention may each be combined with any of the other aspects and embodiments. These and other aspects of the invention will be apparent from and elucidated with reference to the embodiments described hereinafter.

### BRIEF DESCRIPTION OF THE FIGURES

The lens stack for creating tunable astigmatism and the electronic device comprising the lens stack will now be described in more details with regard to the accompanying figures. The figures show one way of implementing the present invention and are not to be construed as being limiting to other possible embodiments falling within the scope of the attached claim set.
Figure 1 shows a cross section view of a lens stack comprising two cylindrically tunable lens according to some embodiments of the invention.
Figure 2 shows a front view of a lens stack comprising two cylindrically tunable lens according to some embodiments of the invention.
Figure 3 shows a cross section view of a lens stack comprising two cylindrically tunable lens and a third lens according to some other embodiments of the invention.
Figure 4 shows a 3D schematic view of a lens stack comprising two cylindrically tunable lens and a third lens according to some other embodiments of the invention.
Figure 5 shows a front view of a lens stack comprising two cylindrically tunable lens and a third lens according to some other embodiments of the invention.
Figure 6 shows a side view of a single tunable lens, such as the third lens according to some embodiments of the invention.
Figure 7 shows a side view of a lens stack comprising two cylindrically tunable lens stacked on each other according to some embodiments of the invention.
Figure 8 shows a side view of a lens stack comprising two cylindrically tunable lens and a rigid assembly according to some embodiments of the invention.
Figure 9 shows a side view of a lens stack comprising two cylindrically tunable lens having a membrane in common according to some embodiments of the invention.
Figure 10 shows a side view of a lens stack comprising two cylindrically tunable lens and an open rigid structure or substrate according to some embodiments of the invention.
Figure 11 shows a 3D schematic view of a lens stack comprising two cylindrically tunable lens and an open rigid structure or substrate according to some embodiments of the invention.

### DETAILED DESCRIPTION OF AN EMBODIMENT

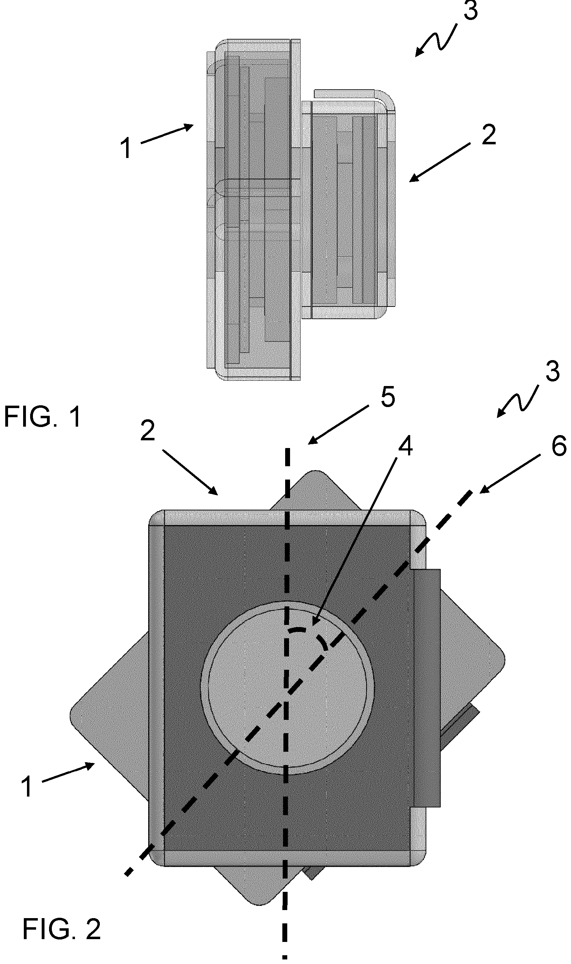

Figure 1 and figure 2 show a cross section and a front view of a lens stack 3 comprising a first cylindrically tunable lens 1 and a second cylindrically tunable lens 2.

The second cylindrically tunable lens 2 is located onto the first cylindrically tunable lens 1 so that the longitudinal axis 5 of the first cylindrically tunable lens 1 is at an angle 4 in respect to the longitudinal axis 6 of the second cylindrically tunable lens 2.

The angle 4 in figure 2 is shown as 45°, although, in other embodiments the angle 4 may be between 30° and 90°.

When in operation, the first cylindrically tunable lens 1 and the second cylindrically tunable lens 2 operates synergically to create or compensate astigmatism aberrations.

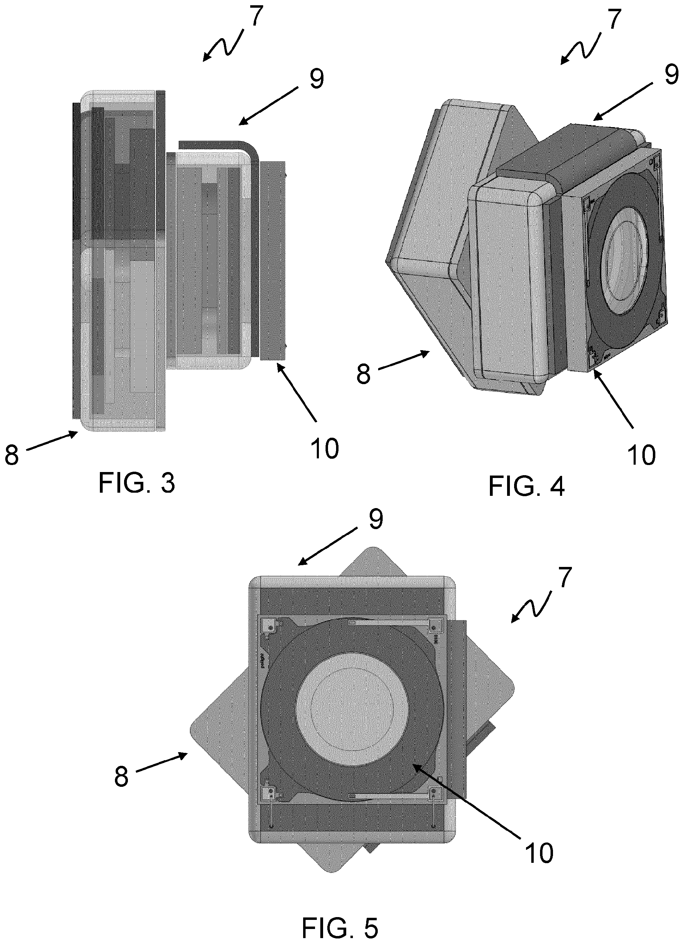

Figure 3, figure 4 and figure 5 show a cross section view, a 3D schematic view and a front view of a lens stack 7 comprising a first cylindrically tunable lens 8 and a second cylindrically tunable lens 9 and a third lens 10.

Third lens 10 has a focusing function, while the first cylindrically tunable lens 8 and the second cylindrically tunable lens 9 operates synergically to create or compensate astigmatism aberrations.

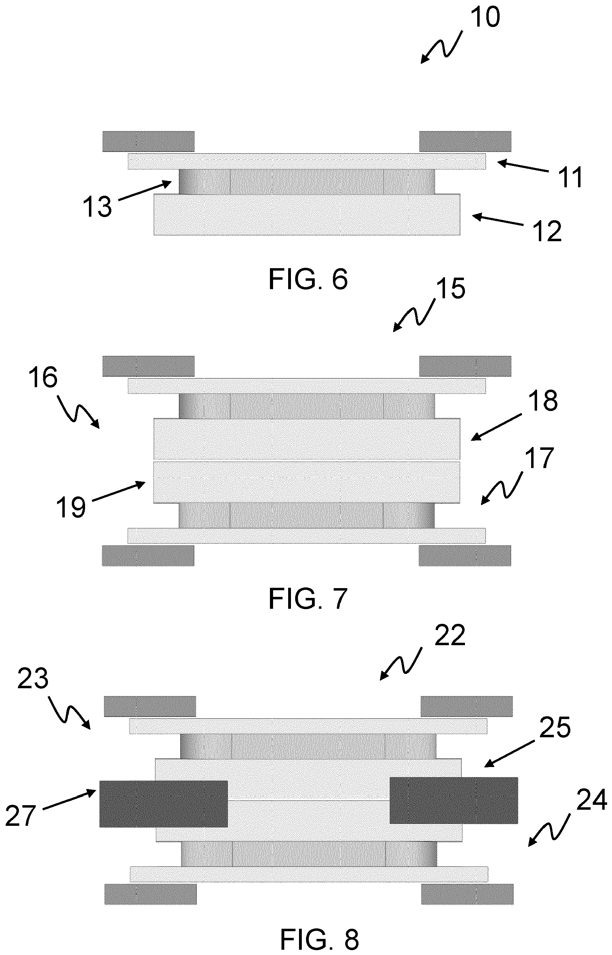

Figure 6 shows a side view of the third tunable lens 10, comprising a deformable lens body 13 sandwiched between a first transparent membrane 11 and a second transparent membrane 12 and actuators 14 located onto the first transparent membrane 11.

When in operation, upon actuation via actuators 14, the first transparent membrane 11 is bowed and deformed into a desired shape so as to provide a desired degree of focus to the lens.

Figure 7 shows a side view of a lens stack 15 comprising a first cylindrically tunable lens 16 and a second cylindrically tunable lens 17 stacked on each other so that the second transparent membrane 18 of the first cylindrically tunable lens 16 is in contact with the first membrane 19 of the second cylindrically tunable lens 17.

Figure 8 shows a side view of a lens stack 22 comprising a first cylindrically tunable lens 23 and a second cylindrically tunable lens 24 stacked on each other so that the second transparent membrane 25 of the first cylindrically tunable lens 23 is in contact with the first membrane 26 of the second cylindrically tunable lens 24.

The two cylindrically tunable lens 23 and 24 are connected through a rigid assembly 27.

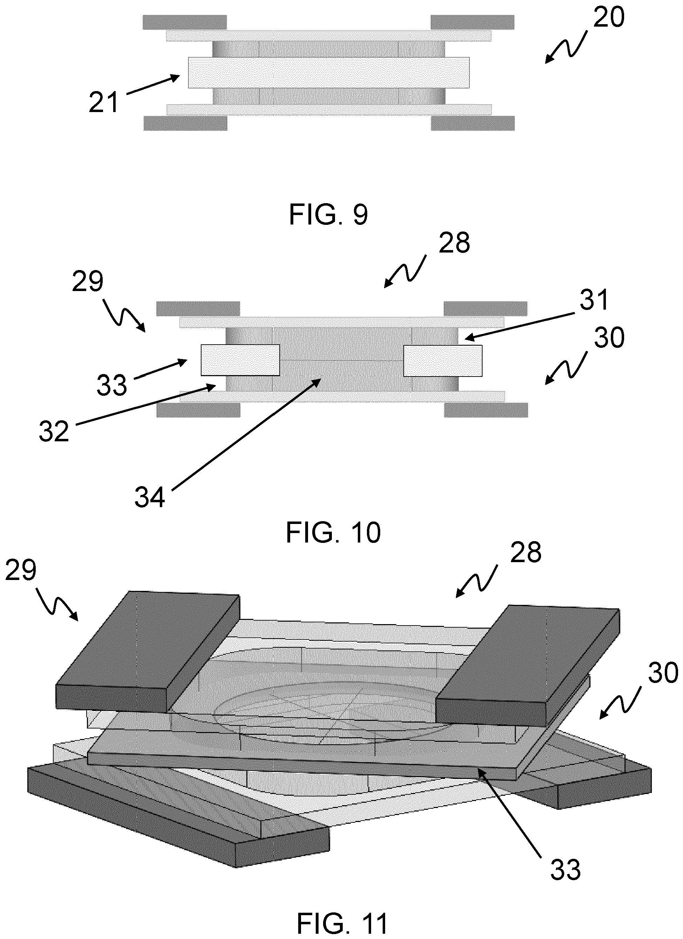

Figure 9 shows a side view of a lens stack 20 comprising two cylindrically tunable lens having a membrane 21 in common.

Membrane 21 may be a rigid structure, such as a back window, acting as a shared membrane between the two cylindrically tunable lenses.

Figure 10 shows a side view of a lens stack 28 comprising two cylindrically tunable lens 29 and 30.

The two cylindrically tunable lens 29 and 30 have two separated lens bodies 31 and 32 and an open rigid substrate having an internal ring structure 33 separating the lens bodies that are in contact with each other through opening 34.

Figure 11 shows a 3D schematic view of a lens stack 28 comprising two cylindrically tunable lens and an open rigid structure 33 in between the lens bodies.

The opening in the rigid structure 33 allows for at least partial contact between the lens bodies of the two cylindrically tunable lens 29 and 30.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A lens stack for creating tunable astigmatism, said lens stack comprising:
- a first cylindrically tunable lens comprising a lens body sandwiched between a first and a second transparent membrane and one or more actuators located onto said first transparent membrane or onto said second transparent membrane, said first cylindrically tunable lens having a first longitudinal axis.

2. A lens stack for creating tunable astigmatism, according to claim 1, further comprising:
- a second tunable lens comprising a lens body sandwiched between a first and a second transparent membrane and one or more actuators located onto said first transparent membrane or onto said second transparent membrane.

3. A lens stack for creating tunable astigmatism, according to claim 2, wherein said second tunable lens is a second cylindrically tunable lens having a second longitudinal axis and wherein said second longitudinal axis of said second cylindrically tunable lens is at an angle, between 0° and 90°, such as between 30° and 60°, such as 45° in respect to said first longitudinal axis of said first cylindrically tunable lens.

4. A lens stack for creating tunable astigmatism, according to claim 3, wherein said first or said second membrane of said first cylindrically tunable lens or said second cylindrically tunable lens is a rigid structure.

5. A lens stack for creating tunable astigmatism, according to any of the preceding claims 3-4, wherein said second transparent membrane of said first cylindrically tunable lens is said first membrane of said second cylindrically tunable lens.

6. A lens stack for creating tunable astigmatism, according to any of the preceding claims 3-5, wherein said second transparent membrane of said first cylindrically tunable lens or said first membrane of said second cylindrically tunable lens is an open rigid substrate, such as a ring structure.

7. A lens stack for creating tunable astigmatism, according to any of the preceding claims 3-6, wherein said second cylindrically tunable lens is connected to said first cylindrically tunable lens via a rigid assembly.

8. A lens stack for creating tunable astigmatism, according to any of the preceding claims 3-7, wherein said second cylindrically tunable lens is abutted said first cylindrically tunable lens.

9. A lens stack for creating tunable astigmatism, according to any of the preceding claims, further comprising at least a third lens, said third lens being a tunable lens comprising a transparent, deformable lens body sandwiched between a first and a second transparent membrane and one or more actuators located onto said first transparent membrane or onto the second transparent membrane.

10. A lens stack for creating tunable astigmatism, according to claim 9, wherein said third lens is connected to said second cylindrically tunable lens via a rigid assembly or said third lens is abutted said second cylindrically tunable lens.

11. A lens stack for creating tunable astigmatism, according to any of the preceding claims, wherein said one or more actuators of said first cylindrically tunable or second cylindrically tunable or third lens are connected to said first or second transparent membrane of said first cylindrically tunable, second cylindrically tunable or third lens, respectively, by adhesive means or by pressure means.

12. A lens stack for creating tunable astigmatism, according to any of the preceding claims, wherein said lens body of said first cylindrically tunable, and/or second cylindrically tunable and/or third lens has a refractive index above 1.29.

13. A lens stack for creating tunable astigmatism, according to any of the preceding claims, wherein said lens body of said first cylindrically tunable, and/or second cylindrically tunable and/or third lens has an elastic modulus larger than 300 Pa.

14. A lens stack for creating tunable astigmatism, according to any of the preceding claims, wherein said lens body of said first cylindrically tunable, and/or second cylindrically tunable and/or third lens is made from a polymer network of cross-linked or partly cross-linked polymers, and a miscible oil or combination of oils.

15. An electronic device comprising a lens stack according to any of preceding claims, wherein said electronic device is anyone of:
- a display of a portable computer device such as a smartphone, a watch, a tablet, such as an iPad^{®},
- a pair of spectacles,
- a pair of AR-VR glass/spectacles
- a measurement device,
- an image projector arranged for creating an image by scanning light beams,
- a camera module,
- a collimated laser diode device,
- another electronic device.
